# EUROPÄISCHE PATENTANMELDUNG

(11) **EP 0 881 800 A2**
(43) Veröffentlichungstag der Anmeldung: **02.12.1998**
(21) Anmeldenummer: 98108765.3
(22) Anmeldetag: 13.05.1998
(51) Int. Cl.: H04L 12/56, H04Q 11/04

(54) **Verfahren und Anordnung zur Steuerung von Zugriffen von Netzabschlusseinheiten auf vorgegebene Ressourcen eines paketorientierten Kommunikationsnetzes**

(30) Priorität: 28.05.1997 DE 19722435
(71) Anmelder: SIEMENS AKTIENGESELLSCHAFT, 80333 München (DE)
(72) Erfinder: Heeke, Helmut, 81245 München (DE)

(57) **Zusammenfassung**

Im Rahmen von Verbindungs-Aufbauten werden durch Eintragen von Zugriffsberechtigungen (zb1...n) in ringförmig verkettete Speicher (SP1...z) in einem paketorientierten Kommunikationsnetz (OKN) angeordneten Netzabschlußeinheiten (NT1...n) von diesen angeforderte Teil-Kommunikationsnetz-Ressourcen (tr1...n) zugeteilt. Durch Abtastung der Speicher (SP1...z) wird entsprechend den eingetragenen Zugriffsberechtigungen (zb1...n) den Netzabschlußeinheiten (NT1...n) der Zugriff auf die zugeteilten Teil-Kommunikationsnetz-Ressourcen (tr1...n) erteilt. Vorteilhaft werden die Kommunikationsnetz-Ressourcen (vr) auf beliebig viele Netzabschlußeinheiten (NT1...n) verteilt.

## Beschreibung

In aktuellen nach dem Asynchronen Transfer Modus - ATM - konzipierten Kommunikationsnetzen, insbesondere Teilnehmer-Anschlußnetzen und Zubringernetzen - ACCESS Networks, z.B. Passiv Optical Networks oder Fiber Coax Networks - werden die zur Verfügung stehenden Netz-Ressourcen auf an das Kommunikationsnetz angeschlossene Netzabschlußeinheiten bzw. auf die mit den Netzabschlußeinheiten verbundenen Kommunikationsendgeräte aufgeteilt. Dabei wird der Zugriff der Netzabschlußeinheiten bzw. Kommunikationsendgeräte auf das gemeinsam genutzte Übertragungsmedium - z.B. Lichtwellenleiter oder Funkkanal - durch einen, bei hohen Übertragungsgeschwindigkeiten und bei einer Vielzahl von angeschlossenen Kommunikationsendgeräten üblicherweise durch Hardware realisierten Algorithmus gesteuert, durch welchen einer Kommunikationsnetz-Ressourcen anfordernden Netzabschlußeinheit die Zugriffsberechtigung erteilt wird.

In bereits installierten Teilnehmer-Anschlußnetzen ist beispielsweise in einer mit jeder Netzabschlußeinheit verbundenen Netzkontrolleinheit für jede Netzabschlußeinheit ein Timer bzw. Zähler realisiert, welche im Rahmen von von den Netzabschlußeinheiten eingeleiteten Verbindungs-Aufbauten gestartet werden. Ein Timer läuft dann ab, bzw. der Zähler erreicht dann einen vorbestimmten Wert, sobald in einer betroffenen Netzabschlußeinheit ein neues Datenpaket mit Nutzdaten gefüllt und zur Datenübertragung in einen ebenfalls in der Netzabschlußeinheit realisierten Pufferspeicher zwischengespeichert ist. Die Dimensionierung der Zählers, bzw. die Zeit bis zum Ablaufen eines Timers erfolgt in Abhängigkeit von den jeweils während den Verbindungs-Aufbauten reservierten Datenübertragungsraten. Ein das Ablaufen eines Timers anzeigendes Signalisierungssignal stellt eine Netzabschlußeinheit-individuelle Anforderung auf Sendeberechtigung auf das gemeinsam genutzte Übertragungsmedium dar, welche sequentiell in einen in der Netzkontrolleinheit realisierten,
von allen Netzabschlußeinheiten gemeinsam genutzten Speicher - z.B. FIFO-Speicher - gespeichert wird. Aus diesem werden die gespeicherten Sendeberechtigungen ausgelesen und als tatsächliche Sendeberechtigung an die Netzabschlußeinheiten bzw. Kommunikationsendgeräte übermittelt, welche somit den Zugriff auf das Übertragungsmedium erhalten. Hierbei können beispielsweise zwei Timer zur gleichen Zeit ablaufen, d.h. zwei zeitgleiche Zugriffsberechtigungen müßten gespeichert und gesteuert werden. Da jedoch zwei zeitgleiche Zugriffe nicht möglich sind, wird eine der beiden Zugriffsberechtigungen solange verzögert, bis der aktuelle Zugriff abgeschlossen ist. Diese Verzögerung wird als "Cell Delay Variation" bezeichnet. Bei Ablauf von mehreren Timern zur gleichen Zeit wird der Wert der "Cell Delay Variation" entsprechend erhöht.

Desweiteren ist bereits vorgeschlagen worden, daß die von den Netzabschlußeinheiten angeforderten Sendeberechtigungen direkt durch eine zentrale Steuereinheit erfaßt und gespeichert werden und damit die angeforderten Sendeberechtigungen auf das gemeinsam genutzte Übertragungsmedium gleichmäßig verteilt werden.

Die vorhergehend beschriebenen Verfahren zur Vergabe von Sendeberechtigungen sind nur für eine beschränkte Anzahl von Netzabschlußeinheiten bzw. Kommunikationsendgeräten realisierbar. Desweiteren weisen die Verzögerungszeiten, in denen die Netzabschlußeinheiten den Zugriff auf das Übertragungsmedium erhalten, statistische Schwankungen bzw. eine unterschiedliche "Cell Delay Variation" auf. Der Wert der "Cell Delay Variation" hängt von den Datenübertragungsraten aller aufgebauten Verbindungen ab und wird sehr groß, wenn die Gesamt-Datenübertragungsrate des gemeinsam genutzten Übertragungsmediums sich den Wert 100% nähert. Die großen Verzögerungszeiten verursachen ein Überlaufen von Pufferspeichern und somit einen extremen Anstieg der Fehlerrate bei der Datenübertragung, was einen protokollgemäßen Abbruch von aufgebauten Verbindungen zur Folge hat.

Der Erfindung liegt somit die Aufgabe zugrunde, die Nutzung vorgegebener vermittlungstechnischer und übertragungstechnischer Ressourcen in einem paketorientierten Kommunikationsnetz zu optimieren. Die Aufgabe wird durch die kennzeichnenden Merkmale der Patentansprüche 1 und 14 gelöst.

Der wesentliche Aspekt des erfindungsgemäßen Verfahrens zur Steuerung von Zugriffen von Netzabschlußeinheiten auf vorgegebene Ressourcen eines paketorientierten Kommunikationsnetzes besteht darin, daß den Netzabschlußeinheiten ringförmig verkettete Speicher zugeordnet sind, wobei die sukzessive, zyklisch abtastbaren Speicher vorgegebene Teil-Kommunikationsnetz-Ressourcen repräsentieren. Im Rahmen von von den Netzabschlußeinheiten eingeleiteten Verbindungsaufbauten werden durch Eintragen von Zugriffsberechtigungen in die ringförmig verketteten Speicher den Netzabschlußeinheiten angeforderte Teil-Kommunikationsnetz-Ressourcen zugeteilt. Bei einer Abtastung eines ringförmig verketteten Speichers wird entsprechend der eingetragenen Zugriffsberechtigung der betroffene Netzabschlußeinheit aktuell der Zugriff auf die zugeteilte Teil-Kommunikationsnetz-Ressourcen erteilt.

Der wesentliche Vorteil des erfindungsgemäßen Verfahrens besteht darin, daß die vorgegebenen Ressourcen eines paketorientierten Kommunikationsnetzes auf beliebig viele darin angeordnete Netzabschlußeinheiten verteilt werden können, wobei die paketorientierten Kommunikationsnetze, beispielsweise Paketnetze wie ATM-Netze aber auch lokale, paketorientierte Kommunikationsnetze - beispielsweise Bus-, Ring- oder Sternnetze - umfassen. Des weiteren können diese vorgegebenen Ressourcen - beispielsweise eine Übertragungsrate von 622 Mbit/s oder 2,6 Gbit/s - bei Bedarf einer einzigen Netzabschlußeinheit zugeteilt werden.

Vorteilhaft wird bei einer den angeforderten Teil-Kommunikationsnetz-Ressourcen-Umfang modifizierenden Signalisierung von den Netzabschlußeinheiten oder bei einer eine Modifizierung der Verfügbarkeit der vorgegebenen Ressourcen anzeigenden Signalisierung vom paketorientierten Kommunikationsnetz die Zuteilung der angeforderten Teil-Kommunikationsnetz-Ressourcen erneut durchgeführt - Anspruch 2. Durch diese vorteilhafte Ausgestaltung werden aktuelle Änderungen bei den angeforderten Teil-Kommunikationsnetz-Ressourcen berücksichtigt, so daß die zur Verfügung stehenden vorgegebenen Ressourcen des paketorientierten Kommunikationsnetzes optimal auf die jeweils eine Verbindung aktuell haltenden bzw. vermittelnden Netzabschlußeinheiten verteilt werden.

Nach einer weiteren vorteilhaften Ausgestaltung sind den Netzabschlußeinheiten entsprechend den ringförmig verketteten Speichern ausgestaltete weitere ringförmig verkettete Speicher zugeordnet, wobei die Zugriffsberechtigungen erstmalig in die ringförmig verketteten Speicher oder weiteren ringförmig verketteten Speichern eingetragen werden und die Steuerung von Zugriffen von Netzabschlußeinheiten aktuell durch diese Speicher gesteuert wird. Bei jeder Änderung von Zugriffsberechtigungen werden alle Zugriffsberechtigungen erneut ermittelt und in die jeweils nicht für die Steuerung von Zugriffen aktuell benutzten Speicher eingetragen. Nach diesem Eintragen werden nach der aktuellen Erteilung eines Zugriffes diese Speicher zur Steuerung von Zugriffen benutzt - Anspruch 3. Durch diese vorteilhafte Ausgestaltung ist ein Eintragen von Zugriffsberechtigungen in die ringförmig verketteten Speicher während des laufenden Betriebs möglich. So wird während der Abtastung der ringförmig verketteten Speicher eine Neuzuordnung der Zugriffsberechtigungen zu den ringförmig verketteten Speicher - beispielsweise durch einen Verbindungsaufbau einer Netzabschlußeinheit initiiert - im Hintergrund d.h. parallel ermittelt und anschließend die ermittelten Zugriffsberechtigungen in die jeweils nicht für die Steuerung von Zugriffen aktuell benutzten ringförmig verketteten Speicher während des laufenden Betriebes eingetragen. Somit kann eine schnelle bzw. effektive Steuerung von Zugriffsberechtigungen realisiert werden.

Vorteilhaft ist im Rahmen des Verbindungsaufbaus durch die Belegung der ringförmig verketteten Speicher die Verzögerung der Zugriffe der Netzabschlußeinheiten auf die zugeteilten Teil-Kommunikationsnetz-Ressourcen bestimmt. Beim Zugriff auf die zugeteilten Teil-Kommunikationsnetz-Ressourcen werden die ermittelten Verzögerungen nicht überschritten - Anspruch 4. Durch diese vorteilhafte Ausgestaltung ist bereits während der Phase des Verbindungsaufbaus die Verzögerung der Zugriffe der Netzabschlußeinheiten auf das gemeinsam genutzte Übertragungsmedium - "Cell Delay Variation" - bekannt und wird selbst bei einer vollständigen Auslastung der vorgegebenen Ressourcen des paketorientierten Kommunikationsnetzes für jede angeschlossene Netzabschlußeinheit garantiert, d.h. die festgelegten Verzögerungen sind somit maximale Verzögerungen der zu übertragenen Pakete, die nicht überschritten werden.

Nach einer weiteren vorteilhaften Ausgestaltung sind die Zugriffsberechtigungen der Netzabschlußeinheiten in die ringförmig verketteten Speicher derart eingetragen, daß die Zugriffe auf die zugeteilten Teil-Kommunikationsnetz-Ressourcen nach vorgegebenen Kriterien optimiert sind - Anspruch 6. Ein solches vorgegebenes Kriterium stellt beispielsweise die minimale Verzögerung der Zugriffe der Netzabschlußeinheiten auf die zugeteilten Teil-Kommunikationsnetz-Ressourcen dar - Anspruch 7. Durch dieses vorteilhafte Ausgestaltungsmerkmal sind Verbindungen mit einer minimalen Verzögerung der Zugriffe der entsprechenden Netzabschlußeinheiten, d.h. mit einer minimalen "Cell Delay Variation" realisierbar, welche insbesondere für die Übertragung von zeitkritischen Daten - beispielsweise Sprach- oder Videodaten - geeignet sind, wobei die optimierten Verzögerungen nicht überschritten werden.

Vorteilhaft ist das paketorientierte Kommunikationsnetz durch ein nach den Asynchronen Transfer Modus -ATM- konzipiertes Kommunikationsnetz realisiert - Anspruch 11 -, und die vorgegebenen Ressourcen des paketorientierten Kommunikationsnetz durch die Übertragungskapazität der drahtgebundenen, optischen oder drahtlosen Übertragungsstrecken im Zubringernetz des paketorientierten Kommunikationsnetzes repräsentiert - Anspruch 12. Solche drahtgebundenen, optischen oder drahtlosen Übertragungsstrecken sind beispielsweise zwischen einer das erfindungsgemäße Verfahren ausführenden Netzkontrolleinheit - siehe Anspruch 14 - und dem paketorientierten Kommunikationsnetz oder zwischen der Netzkontrolleinheit und den daran angeschlossenen Netzabschlußeinheiten - auch als Teilnehmer-Anschlußnetz bezeichnet - realisiert.

Weitere vorteilhafte Ausgestaltungen des erfindungsgemäßen Verfahrens sowie eine Netzkontrolleinheit zur Steuerung von Zugriffen auf vorgegebene Ressourcen eines paketorientierten Kommunikationsnetzes, sind den weiteren Ansprüchen zu entnehmen.

Im folgenden wird das erfindungsgemäße Verfahren zur Steuerung von Zugriffen von Netzabschlußeinheiten auf vorgegebene Ressourcen eines paketorientierten Kommunikationsnetzes anhand zweier Blockschaltbilder näher erläutert. Dabei zeigen:
- FIG 1: eine über ein Teilnehmer-Anschlußnetz mit mehreren Netzabschlußeinheiten und mit einem übergeordneten paketorientierten Kommunikationsnetz verbundene Netzkontrolleinheit und
- FIG 2: eine Darstellung zweier durch ringförmig verkettete Speicher realisierte Ringpuffer mit darin eingetragenen Zugriffsberechtigungen von Netzabschlußeinheiten.

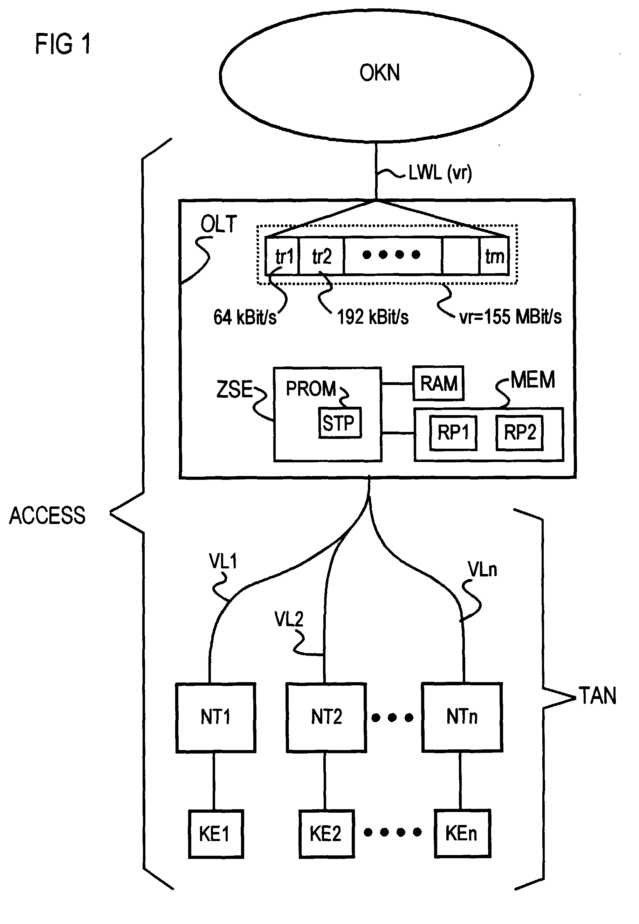

FIG 1 zeigt eine Netzkontrolleinheit OLT, welche über vorgegebenen Ressourcen vr mit einem paketorientierten Kommunikationsnetz OKN verbunden ist. In diesem Ausführungsbeispiel ist das paketorientierte Kommunikationsnetz OKN durch ein nach dem Asynchronen Transfer Modus - ATM - konzipiertes Kommunikationsnetz realisiert. Die vorgegebenen Ressourcen vr mit einer Datenübertragungsrate von beispielsweise 155 MBit/s sind durch eine Lichtwellenleiter-Übertragung realisiert, wobei die Netzkontrolleinheit OLT beispielsweise über einen einzigen Lichtwellenleiter LWL an das nach dem ATM-konzipierte Kommunikationsnetz OKN angeschlossen ist. An die Netzkontrolleinheit OLT sind über ein Teilnehmer-Anschlußnetz TAN realisierende Anschluß-Leitungen VL1...n mehrere Netzabschlußeinheiten NT1...n angeschlossen. Die Netzkontrolleinheit OLT und das Teilnehmer-Anschlußnetz TAN bilden das Zubringernetz ACCESS für das ATM-orientierte Kommunikationsnetz OKN. In der Netzkontrolleinheit OLT ist eine die Zugriffe der Netzabschlußeinheiten NT1...n auf das Zubringernetz ACCESS steuernde Zugriffs-Steuereinheit ZSE angeordnet, welche mit einem flüchtigen Speicher RAM verbunden ist. Jede Netzabschlußeinheit NT1...n ist mit zumindest einem Kommunikationsendgerät KE verbindbar, wobei in diesem Ausführungsbeispiel ein erstes Kommunikationsendgerät KE1 mit der ersten Netzabschlußeinheit NT1 und eine zweites Kommunikationsendgerät KE2 mit der zweiten Netzabschlußeinheit NT2 verbunden ist. Das erste Kommunikationsendgerät KE1 repräsentiert ein digitales Fernsprechendgerät, beispielsweise ein ISDN-orientiertes Telefon. Bei z.B. Abheben des Telefonhörers wird eine entsprechende Verbindungsaufbau-Meldung an die erste Netzabschlußeinheit NT1 übermittelt. Von der ersten Netzabschlußeinheit NT1 wird ein protokollgemäßer Verbindungsaufbau zur Netzkontrolleinheit OLT und damit zum übergeordneten ATM-orientierten Kommunikationsnetz OKN eingeleitet. Im Rahmen des Verbindungs-Aufbaus wird beispielsweise für das der ersten Netzabschlußeinheit NT1 zugeordnete Kommunikationsendgerät KE1 eine Datenübertragungsrate von 64 KBit/s reserviert.

Die während eines Telefongespräches vom ersten Kommunikationsendgerät KE1 an die erste Netzabschlußeinheit NT1 übermittelten, zeitkritischen Daten bzw. Sprachdaten werden in einem in der ersten Netzabschlußeinheit NT1 angeordneten Zwischenspeicher - nicht dargestellt - zwischengespeichert. Um eine Übertragung der zeitkritischen Daten in Echtzeit zu garantieren sowie um ein Überlaufen des Zwischenspeichers zu verhindern muß durch die in der Netzkontrolleinheit OLT angeordnete Zugriffs-Steuereinheit ZSE der ersten Netzabschlußeinheit NT1 in entsprechenden regelmäßigen Zeitabständen der Zugriff auf die vorgegebenen, von allen Netzabschlußeinheiten NT1...n gemeinsam genutzten Ressourcen vr des Zubringernetzes ACCESS bzw. des ATM-orientierten Kommunikationsnetzes OKN erteilt werden.

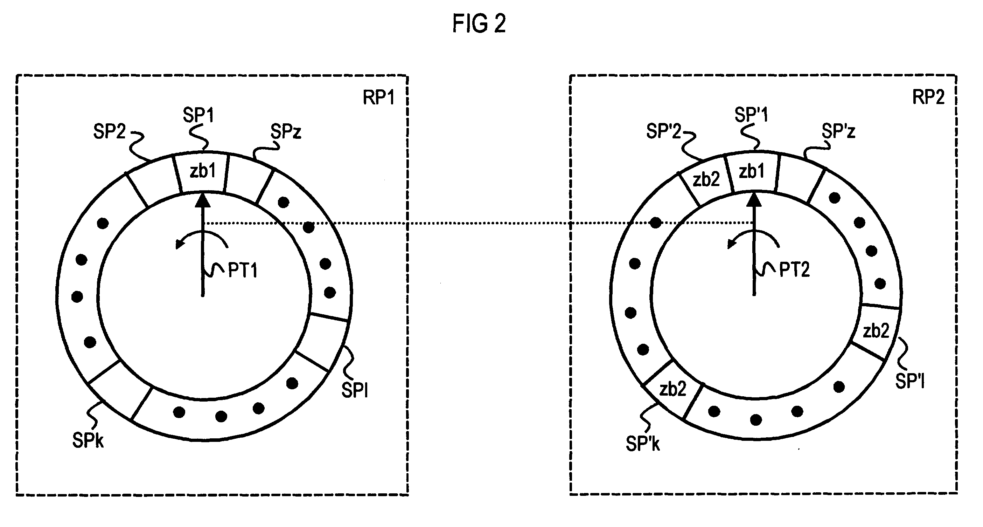

Das Prinzip der erfindungsgemäßen Steuerung von Zugriffen auf die vorgegebene Ressourcen vr des Lichtwellenleiters LWL ist in FIG 2 dargestellt. FIG 2 zeigt einen ersten durch ringförmig verkettete Speicher SP1...z gebildeten Ringpuffer RP1 sowie weitere ringförmig verkettete Speicher SP'1...z, welche einen zweiten Ringpuffer RP2 bilden, wobei die beiden in einem mit der Zugriffs-Steuereinheit ZSE verbundenen Speicher MEM angeordneten Ringpuffer RP1, RP2 - siehe FIG 1 - identisch strukturiert sind, d.h. aus einer gleichen Anzahl ringförmig verketteter Speicher SP1...z, SP'1...z aufgebaut sind. Die ringförmig verketteten Speicher SP1...z, SP'1...z werden jeweils durch einen Abtaster PT1,2 sukzessive und zyklisch abgetastet, wobei der erste Abtaster PT1 den ersten Ringpuffer RP1 und der zweite Abtaster PT2 den zweiten Ringpuffer RP2 abtastet. Die beiden Ringpuffer RP1,2 bzw. die darin angeordneten, ringförmig verketteten Speicher SP1...z, SP'1...z können z.B. durch zwei Speicherbausteine mit je 4Kx8 Bit Speichervolumen - nicht dargestellt - und die beiden Abtaster PT1,2 jeweils durch einen digitalen Zähler - nicht dargestellt - mit 12-Bit Wortbreite und mit einer daran angeschlossenen Vorrichtung - nicht dargestellt - zum Auslesen der Speicher SP1...z, SP'1...z realisiert sein. Beide Abtaster PT1, PT2 sind logisch miteinander gekoppelt - durch punktierte Linie angedeutet - d.h. es werden zum selben Zeitpunkt jeweils die selben, jeweils in den Ringpuffern RP1, RP2 identisch angeordneten Speicher SP1...z, SP'1...z abgetastet, wobei jedoch nur die Speicher SP1...z, SP'1...z eines Ringpuffers RP1,2 ausgelesen werden und der Zugriff auf das Zubringernetz ACCESS anhand der ausgelesenen Informationen erteilt wird. Die Abtastgeschwindigkeit richtet sich dabei nach dem Ressourcen-Umfang bzw. der Gesamt-Daten-Übertragungsrate vr des Lichtwellenleiters LWL, wobei die ringförmig verketteten Speicher SP1...z, SP'1...z zyklisch mit jedem ATM-spezifischen Zellentakt abgetastet werden. Die ringförmig verketteten Speicher SP1...z, SP'1...z repräsentieren vorgegebene Teil-Kommunikationsnetz-Ressourcen tr1...n des Lichtwellenleiters LWL, welche den einzelnen Netzabschlußeinheiten NT1...n bzw. Kommunikationsendgeräten KE1, KE2 zuordenbar sind. Das erfindungsgemäße Zuordnen der Teil-Kommunikationsnetz-Ressourcen tr1...n zu den Netzabschlußeinheiten NA1...n erfolgt durch Eintragen zumindest einer Netzabschlußeinheit-spezifischen Identifizierung bzw. zumindest einer eine Netzabschlußeinheit NT1...n identifizierenden Zugriffsberechtigung zb1...n in einen der ringförmig verketteten Speicher SP1...z, SP'1...z. In Abhängigkeit von der Anzahl der jeweils in einem Ringpuffer RP1, RP2 angeordneten ringförmig verketteten Speicher SP1...z, SP'1...z und der Abtastgeschwindigkeit der Abtaster PT1,2 wird eine Grund-Granularität der den Netzabschlußeinheiten NT1...n, bzw. Kommunikationsendgeräten KE1, KE2 zuordenbaren Teil-Kommunikationsnetz-Ressourcen tr1...n bzw. zuordenbaren Teilnehmer-Datenübertragungsraten erreicht. In diesem Ausführungsbeispiel ist beispielsweise die Anzahl der jeweils einen Ringpuffer RP1,2 bildenden, ringförmig verketteten Speicher SP1...z, SP'1...z derart dimensioniert, daß bei einer Gesamt-Daten-Übertragungsrate des Lichtwellenleiters LWL von vr=155 MBit/s alle 48 x 125µs = 6 ms der selbe Speicher SP1...z, SP'1...z durch den rotierenden Abtaster PT1, PT2 abgetastet wird. Bei der Abtastung eines Speichers SP1...z, SP'1...z wird eine eventuell eingetragene Zugriffsberechtigung zb1...n ausgelesen und der entsprechenden Netzabschlußeinheit NT1...n der Zugriff auf das Zubringernetz ACCESS erteilt. Durch die zyklische Abtastung wird beispielsweise einer einem Speicher SP1...z, SP'1...z zugeordneten Netzabschlußeinheit NT1...n alle 6 ms die Zugriffsberechtigung zb1...n auf das Zubringernetz ACCESS erteilt, was bei einer Nutzdatenübertragungsrate von 48 Byte pro ATM-Zelle einer kontinuierlichen Datenübertragungsrate von 64 KBit/s entspricht. Im folgenden wird die Zuteilung und das Eintragen von Zugriffsberechtigungen zb1...n in die ringförmig verketteten Speicher SP1...z, SP'1...z näher erläutert:

Wie bereits erläutert, wird von dem ersten, ISDN-orientierten Kommunikationsendgerät KE1 der entsprechenden ersten Netzabschlußeinheit NT1 eine Verbindungsaufbau-Anforderung zur Übertragung von Sprachdaten übermittelt. Von der ersten Netzabschlußeinheit NT1 wird ein entsprechender Verbindungsaufbau zur Netzkontrolleinheit OLT gemäß dem ATM-Protokoll eingeleitet. Gemäß dem erfindungsgemäßen, in der Netzkontrolleinheit OLT realisierten Verfahren zur Steuerung von Zugriffen wird ein geeigneter freier Speicher - hier SP1 - im aktuell abgetasteten bzw. ausgelesenen Ringpuffer - hier RP1 - ermittelt und die der ersten Netzabschlußeinheit NT1 bzw. dem daran angeschlossenen ersten Kommunikationsendgerät KE1 zugeordnete Zugriffsberechtigung zb1 in den ermittelten Speicher SP1 eintragen, wodurch die durch den Speicher SP1 repräsentierte Teil-Kommunikationsnetz-Ressource tr1 - hier eine Datenübertragungsrate von 64 KBit - der ersten Netzabschlußeinheit NT1 zugeteilt ist.

Vorteilhaft ist der Algorithmus für die Ermittlung bzw. Zuteilung sowie für das Eintragen der ermittelten Zugriffsberechtigungen zb1...n in die ringförmig verketteten Speicher SP1...z, SP'1...z des aktuell nicht abgetasteten Ringpuffers RP1, RP2 durch ein in der Zugriff-Steuereinheit ZSE bzw. in einem Programmspeicher PROM angeordnetes Steuerprogramm STP realisiert. In dem der Zugriffs-Steuereinheit ZSE zugeordneten flüchtigen Speicher RAM ist die momentane Belegung der aktuell abgetasteten Speicher SP1...z, SP'1...z gespeichert, d.h. der flüchtige Speicher RAM enthält immer eine Kopie bzw. Abbildung des aktuell abgetasteten Ringpuffers RP1,2. Bei jedem durch eine Netzabschlußeinheit NT1...n eingeleiteten, ATM-Protokoll-gemäßen Verbindungsaufbau oder einer Bitraten-Änderungssignalisierung wird durch die Zugriffs-Steuereinheit ZSE mit Hilfe der im flüchtigen Speicher RAM abgespeicherten Kopie des aktuell abgetasteten Ringpuffers RP1,2 die Zuteilung von Teil-Kommunikationsnetz-Ressourcen tr1...n zu den ringförmig verketteten Speichern SP1...z, SP'1...z neu ermittelt bzw. berechnet und anschließend die ermittelten und den ringförmig verketteten Speichern SP1...z, SP'1...z neu zugeordneten Zugriffsberechtigungen zb1...n in die aktuell nicht abgetasteten ringförmig verketteten Speicher - hier z.B. SP1...z - eingetragen. Während der Übertragung der aktuell ermittelten Zugriffsberechtigungen zb1...n vom flüchtigen Speicher RAM in den aktuell nicht abgetasteten Ringpuffer - hier RP1 - werden die ringförmig verketteten Speicher SP'1...z des anderen Ringpuffers - hier RP2 - weiter abgetastet, so daß ein Betrieb ohne Störungen, d.h. eine störungsfreie Aktualisierung der Zugriffsberechtigungen zb1...n ermöglicht wird. Nach der Übertragung der Zugriffsberechtigungen zb1...n vom flüchtigen Speicher RAM in die ringförmig verketteten Speicher SP1...z des aktuell nicht abgetasteten Ringpuffers RP1 werden diese ab einem definierten Umschaltzeitpunkt durch den Abtaster PT1 abgetastet und statt der ringförmig verketteten Speicher SP'1...z des zweiten Ringpuffers RP2 aktuell ausgelesen. Der Umschaltzeitpunkt ist dabei derart festgelegt, daß kein Überlauf der in den Netzabschlußeinheiten NT1...n angeordneten Zwischenspeichern eintritt. Beispielsweise kann der Umschaltzeitpunkt auch durch das im Programmspeicher PROM realisierte Steuerprogramm STP bestimmt und die Abtast-Umschaltung durch die Zugriffs-Steuereinheit ZSE mit Hilfe des ermittelten Zeitpunktes initiiert werden.

Da in diesem Ausführungsbeispiel von den anderen Netzabschlußeinheiten NT2...n noch keine Verbindungsaufbauten eingeleitet wurden, sind in die restlichen, im ersten Ringpuffer RP1 angeordneten, ringförmig verketteten Speicher SP2...z keine weiteren Zugriffsberechtigungen zb2...n eingetragen. Alternativ können in die genannten, ungenutzten Speicher SP2...z weitere Informationen, wie beispielsweise:
- "Niemand darf senden" - Meldungen oder
- Steuerinformationen für System-Organisation und -Wartung

eingetragen sein.

Gemäß der in FIG 2 dargestellten, im ersten Ringpuffer RP1 abgespeicherten Zugriffsberechtigung zb1 wird der erste Speicher SP1 alle 6 ms durch den Abtaster PT1 abgetastet und ausgelesen, wodurch der dem ersten Speicher SP1 zugeordneten ersten Netzabschlußeinheit NT1 bzw. den damit verbundenen ersten Kommunikationsendgerät KE1 der Zugriff auf das Zubringernetz ACCESS erteilt wird. Dadurch wird der ersten Netzabschlußeinheit NT1 dann der Zugriff erteilt, wenn 48 Byte an Sprach-Datenvolumen vom ersten Kommunikationsendgerät KE1 an die erste Netzabschlußeinheit NT1 übermittelt und als Nutzdaten in eine ATM-Zelle eingefügt sind.

Während einer aktuell bestehenden Verbindung zwischen dem ersten Kommunikationsendgerät KE1 und der Netzkontrolleinheit OLT wird beispielsweise von dem zweiten Kommunikationsendgerät KE2 - beispielsweise ein Multimedia-Kommunikationsendgerät - eine weitere Verbindungsaufbau-Anforderung zur Übertragung von z.B. Videodaten an die Netzkontrolleinheit OLT übermittelt. Dementsprechend leitet die zweite Netzabschlußeinheit NT2 einen Verbindungsaufbau für eine höherbitratige Datenübertragung - hier z.B. 192 KBit/s - zu der Netzkontrolleinheit OLT gemäß dem ATM-Protokoll ein. Gemäß dem in der Netzkontrolleinheit OLT realisierten erfindungsgemäßen Verfahren werden mittels dem in den Zugriffs-Steuereinheit ZSE realisierten Steuerprogramm STP und der im flüchtigen Speicher RAM abgespeicherten, aktuellen Zuteilung der Zugriffsberechtigungen zb1 geeignete freie, ringförmig verkettete Speicher SP2...z für die Zuteilung von Teil-Kommunikationsnetz-Ressourcen tr2 - hier 192 KBit/s - ermittelt. Nach der Neuberechnung und Zuordnung der Zugriffsberechtigungen zb1,2 wird der Inhalt des flüchtigen Speichers RAM, d.h. die aktuelle Zuteilung der von den Kommunikationsendgeräten KE1, KE2 angeforderten Teil-Kommunikationsnetz-Ressourcen tr1,2 in die ringförmig verketteten Speicher SP'1...z des aktuell nicht abgetasteten zweiten Ringpuffers RP2 übertragen und gespeichert. Nach Abschluß der Datenübertragung werden anstelle des ersten Ringpuffers RP1 die ringförmig verketteten Speicher SP'1...z des zweiten Ringpuffers RP2 durch den zweiten Abtaster PT2 abgetastet und ausgelesen, wodurch die Netzabschlußeinheiten NT1...n bzw. Kommunikationsendgeräte KE1, KE2 gemäß der neu berechneten Zuordnung der Zugriffsberechtigungen zb1,2 den Zugriff auf das Zubringernetz ACCESS erhalten. Die neu berechneten Zugriffsberechtigungen zb1,2 bzw. die dem ersten und zweiten Kommunikationsendgerät KE1, KE2 zugeordneten Teil-Kommunikationsnetz-Ressourcen tr1,2 - hier 64 KBit/s und 192 KBit/s - sind in FIG 2 durch die Belegung der ringförmig verketteten Speicher SP'1...z des zweiten Ringpuffers RP2 dargestellt. Der ersten Netzabschlußeinheit NT1 bzw. dem ersten Kommunikationsendgerät KE1 ist wie vor der Neuberechnung der Zugriffsberechtigungen zb1,2 der erste Speicher SP'1 zugeordnet, welcher zyklisch alle 6 ms abgetastet wird. Dadurch wird dem ersten Kommunikationsendgerät KE1 eine Datenübertragungsrate von 64 KBit/s zur Verfügung gestellt und garantiert.

Für das zweite Kommunikationsendgerät KE2 bzw. für die zweite Netzabschlußeinheit NT2 ist in drei im zweiten Ringpuffer RP2 gleichmäßig angeordneten, ringförmig verketteten Speichern SP'2,k,l jeweils eine Zugriffsberechtigung zb2 eingetragen. Durch die gleichmäßige Anordnung werden die drei Speicher SP'2,k,l in konstanten Zeitabständen von 2 ms zyklisch abgetastet, wodurch der zweiten Netzabschlußeinheit NT2 bzw. dem zweiten Kommunikationsendgerät KE2 alle 2 ms der Zugriff auf das Zubringernetz ACCESS erteilt und somit eine Datenübertragungsrate von 3 x 64 Bit/s = 192 KBit/s zugeteilt und garantiert wird.

Durch die in FIG 2 dargestellte optimale Belegung der im zweiten Ringpuffer RP2 angeordneten, ringförmig verketteten Speicher SP'1,2,k,l mit zugeteilten Zugriffsberechtigungen zb1,2, weisen die Zeitintervalle, in denen den Daten übertragenden Netzabschlußeinheiten NT1,2 der Zugriff auf das Zubringernetz ACCESS erteilt wird, keine statistischen Schwankungen auf. Der Wert der "Cell Delay Variation" ist Null, d.h. Daten übertragende Netzabschlußeinheiten NT1,2 wird dann der Zugriff erteilt, wenn eine ATM-Zelle mit Nutzdaten gefüllt und im Zwischenspeicher der betreffenden Netzabschlußeinheit NT1,2 gespeichert ist. Das im Ausführungsbeispiel beschriebene erfindungsgemäße Verfahren zur Zuteilung von Zugriffsberechtigungen zb1...n weist den Vorteil auf, daß bereits während des Aufbaus einer angeforderten Verbindung der Wert der "Cell Delay Variation" ohne zusätzliche Meßeinrichtungen einmalig ermittelt wird und bekannt ist. Abhängig vom ermittelten Wert wird die Verbindung endgültig aufgebaut oder beendet. Bei einer Datenübertragung über eine derart aufgebaute Verbindung wird der ermittelte Wert der "Cell Delay Variation" unabhängig von der Auslastung der Netzkontrolleinheit OLT garantiert, d.h. die "Cell Delay Variation" wird nicht überschritten. Dies bedeutet, daß die zugeteilten Teil-Kommunikationsnetz-Ressourcen tr1...n den entsprechenden Netzabschlußeinheiten NT1...n uneingeschränkt zur Verfügung stehen.

In Teilnehmer-Anschlußnetzen TAN mit einer großen Anzahl daran angeschlossener Teilnehmer bzw. Netzabschlußeinheiten NT1...n tritt mitunter der Fall auf, daß bei einem weiteren von einer Netzabschlußeinheit NT1...n angeforderten Verbindungsaufbau die für eine optimale Zuordnung von Zugriffsberechtigungen zb1...n ermittelten Speicher SP1...z, SP'1...z bereits mit Zugriffsberechtigungen zb1...n anderer Netzabschlußeinheiten NT1...n belegt sind. Für diese Fälle kann das in der ZugriffsSteuereinheit ZSE der Netzkontrolleinheit OLT ablaufende Steuerprogramm STP nach unterschiedlichen Kriterien optimiert sein, beispielsweise in der Art, daß die Werte der "Cell Delay Variation" für die jeweils angeforderten Verbindungen minimal sind. Der durch das Steuerprogramm STP realisierte Zuteil-Algorithmus kann beispielsweise derart ausgestaltet sein, daß statt des ermittelten, jedoch bereits mit einer anderen Zugriffsberechtigung zb1...n belegten Speichers SP1...z, SP'1...z der dem belegten Speicher SP1...z, SP'1...z nächstliegende freie Speicher SP1...z, SP'1...z ermittelt die in diesem die Zugriffsberechtigung zb1...n der einen Verbindungsaufbau anfordernden Netzabschlußeinheit gespeichert wird. Durch die nicht optimale Zuteilung der Zugriffsberechtigung zb1...n ist der Wert der "Cell Delay Variation" für diese Verbindung ungleich Null. Vorteilhaft wird jedoch der Wert der "Cell Delay Variation" beim Verbindungsaufbau ermittelt und ist bekannt und wird auch bei einer vollständigen Auslastung der Ressourcen des Zubringernetzes ACCESS nicht überschritten. Desweiteren ist beispielsweise der Zuteil-Algorithmus derart ausgestaltet, daß bei einer Entlastung der Ressourcen des Zubringernetzes ACCESS, d.h. bei Abbau bestehender Verbindungen die Zuordnung der aktuellen Zugriffsberechtigungen zb1...n neu berechnet und somit Daten übertragende Verbindungen mit einer aufweisenden "Cell Delay Variation" hinsichtlich des Zugriffs auf das Zubringernetz ACCESS optimiert werden, d.h. der Wert der "Cell Delay Variation" minimiert wird.

## Patentansprüche

1. Verfahren zur Steuerung von Zugriffen von Netzabschlußeinheiten (NT1...n) auf vorgegebene Ressourcen (vr) eines paketorientierten Kommunikationsnetzes (OKN),
- bei dem den Netzabschlußeinheiten (NT1...n) ringförmig verkettete Speicher (SP1...z) zugeordnet sind, wobei die sukzessive, zyklisch abtastbaren Speicher (SP1...z) vorgegebene Teil-Kommunikationsnetz-Ressourcen (tr1...n) repräsentieren,
- bei dem im Rahmen von von den Netzabschlußeinheiten (NT1...n) eingeleiteten Verbindungs-Aufbauten durch Eintragen von Zugriffsberechtigungen (zb1...n) in die ringförmig verketteten Speicher (SP1...z) den Netzabschlußeinheiten (NT1...n) angeforderte Teil-Kommunikationsnetz-Ressourcen (tr1...n) zugeteilt werden,
- bei dem bei einer Abtastung eines ringförmig verketteten Speichers (SP1...z) entsprechend der eingetragenen Zugriffsberechtigung (zb1...n) der betroffenen Netzabschlußeinheit (NT1...n) aktuell der Zugriff auf die zugeteilte Teil-Kommunikationsnetz-Ressourcen (tr1...n) erteilt wird.

2. Verfahren nach Anspruch 1,
**dadurch gekennzeichnet,**
daß bei einer den angeforderten Teil-Kommunikationsnetz-Ressourcen-Umfang modifizierenden Signalisierung von den Netzabschlußeinheiten (NT1...n) oder bei einer eine Modifizierung der Verfügbarkeit der vorgegebenen Ressourcen (vr) anzeigende Signalisierung vom paketorientierten Kommunikationsnetz (OKN) die Zuteilung der angeforderten Teil-Kommunikationsnetz-Ressourcen (tr1...n) erneut durchgeführt wird.

3. Verfahren nach Anspruch 1 oder 2,
**dadurch gekennzeichnet,**
- daß den Netzabschlußeinheiten (NT1...n) entsprechend den ringförmig verketteten Speichern (SP1...z) ausgestaltete weitere ringförmig verkettete Speicher (SP'1...z) zugeordnet sind, und
- daß Zugriffsberechtigungen (zb1...n) erstmalig in die ringförmig verketteten Speicher (SP1...z) oder weiteren Speicher (SP'1...z) eingetragen werden und die Steuerung von Zugriffen von Netzabschlußeinheiten (NT1...n) aktuell durch diese Speicher (SP1...z, SP'1...z) gesteuert wird, und
- daß bei jeder Änderung von Zugriffsberechtigungen (zb1...n) alle Zugriffsberechtigungen (zb1...n) erneut ermittelt und in die jeweils nicht für die Steuerung von Zugriffen aktuell benutzten Speicher (SP1...z, SP'1...z) eingetragen werden, und
- daß nach diesem Eintragen nach der aktuellen Erteilung eines Zugriffs diese Speicher(SP1...z, SP'1...z) zur Steuerung von Zugriffen benutzt werden.

4. Verfahren nach einen der vorherigen Ansprüche,
**dadurch gekennzeichnet,**
- daß im Rahmen des Verbindungsaufbaus durch die Belegung der ringförmig verketteten Speicher (SP1...z, SP'1...z) die Verzögerung der Zugriffe der Netzabschlußeinheiten (NT1...n) auf die zugeteilten Teil-Kommunikationsnetz-Ressourcen (tr1...n) bestimmt ist, und
- daß beim Zugriff auf die zugeteilte Teil-Kommunikationsnetz-Ressourcen (tr1...n) die ermittelten Verzögerungen nicht überschritten werden.

5. Verfahren nach einen der vorherigen Ansprüche,
**dadurch gekennzeichnet,**
daß ringförmig verkettete Speicher (SP1...z, SP'1...z) ohne eingetragener Zugriffsberechtigung (zb1...n) mit einer weiteren, nicht auf Zugriffsberechtigungen (zb1...n) bezogenen, Netzabschlußeinheit-individuellen Information belegt sind.

6. Verfahren nach einen der vorherigen Ansprüche,
**dadurch gekennzeichnet,**
daß die Zugriffsberechtigungen (zb1...n) der Netzabschlußeinheiten (NT1...n) in die ringförmig verketteten Speicher (SP1...z, SP'1...z) derart eingetragen werden, daß die Zugriffe auf die zugeteilten Teil-Kommunikationsnetz-Ressourcen (tr1...n) nach vorgegebenen Kriterien optimiert sind.

7. Verfahren nach Anspruch 6,
**dadurch gekennzeichnet,**
daß ein vorgegebenes Kriterium die minimale Verzögerung der Zugriffe der Netzabschlußeinheiten (NT1...n) auf die zugeteilten Teil-Kommunikationsnetz-Ressourcen (tr1...n) darstellt.

8. Verfahren nach Anspruch 6,
**dadurch gekennzeichnet,**
daß ein vorgegebenes Kriterium die Priorisierung von Netzabschlußeinheiten (NT1...n) darstellt.

9. Verfahren nach einen der vorherigen Ansprüche,
**dadurch gekennzeichnet,**
daß die ringförmig verketteten Speicher (SP1...z, SP'1...z) mit dem Pakettakt des paketorientierten Kommunikationsnetzes (OKN) abgetastet und die Zugriffsberechtigungen (zb1...n) ausgelesen werden.

10. Verfahren nach einen der vorherigen Ansprüche,
**dadurch gekennzeichnet,**
daß die Anzahl der ringförmig verketteten Speicher (SP1...z, SP'1...z) in Abhängigkeit vom vorgegebenen Ressourcen-Umfang (vr) des paketorientierten Kommunikationsnetzes (OKN) und von einem beliebig vorgebbaren Teil-Kommunikationsnetz-Ressourcen-Umfang (tr1) bestimmt ist.

11. Verfahren nach einen der vorherigen Ansprüche,
**dadurch gekennzeichnet,**
daß das paketorientierte Kommunikationsnetz (OKN) durch ein nach den Asynchronen Transfer Modus - ATM - konzipiertes Kommunikationsnetz realisiert ist.

12. Verfahren nach einen der vorherigen Ansprüche,
**dadurch gekennzeichnet,**
daß die vorgegebenen Ressourcen (vr) des paketorientierten Kommunikationsnetzes (OKN) durch die Übertragungskapazität der drahtgebundenen, optischen oder drahtlosen Übertragungsstrecken im Zubringernetz (ACCESS) des paketorientierten Kommunikationsnetzes (OKN) repräsentiert sind.

13. Verfahren nach einen der vorherigen Ansprüche,
**dadurch gekennzeichnet,**
daß die ringförmig verketteten Speicher (SP1...z, SP'1...z) durch einen Ringspeicher realisiert sind.

14. Netzkontrolleinheit (OLT), die mit Netzabschlußeinheiten (NT1...n) und einem paketorientierten Kommunikationsnetz (OKN) verbunden ist, zur Steuerung von Zugriffen von den Netzabschlußeinheiten (NT1...n) oder von mit diesen verbundenen Kommunikationsendgeräten (KE1...n) auf vorgegebene Ressourcen (vr) des paketorientierten Kommunikationsnetzes (OKN),
- mit Mitteln zur protokollgerechten Steuerung eines paketorientierten Datenaustausches zwischen den Netzabschlußeinheiten (NT1...n) und dem paketorientierten Kommunikationsnetz (OKN),
- mit ringförmig verketteten Speichern (SP1...z), wobei die sukzessive, zyklisch abtastbaren Speicher (SP1...z) vorgegebene Teil-Kommunikationsnetz-Ressourcen (tr1...n) repräsentieren und
- mit Mitteln (ZSE) zur Zuteilung von Zugriffsberechtigungen (zb1...n) von einen Verbindungs-Aufbau einleitenden und TeilKommunikationsnetz-Ressourcen (tr1...n) anfordernden Netzabschlußeinheiten (NT1...n) zu den ringförmig verketteten Speichern (SP1...z) unter Berücksichtigung der angeforderten Teil-Kommunikationsnetz-Ressourcen (tr1...n), und
- mit Mitteln (ZSE) zur Eintragung und zur Speicherung der zugeteilten Zugriffsberechtigungen (zb1...n) in die ringförmig verketteten Speicher (SP1...z), wodurch den Netzabschlußeinheiten (NT1...n) die angeforderten Teil-Kommunikationsnetz-Ressourcen (tr1...n) zugeteilt werden, und
- mit Mittel (ZSE) zum sukzessiven und zyklischen Abtasten der ringförmig verketteten Speicher (SP1...z), und
- mit Mittel (ZSE) zur Bestimmung der in die aktuell abgetasteten ringförmig verketteten Speicher (SP1...z) eingetragenen Zugriffsberechtigungen (zb1...n), und
- mit Mittel zur Übermittlung der ermittelten Zugriffsberechtigungen (zb1...n) an die Mittel zur protokollgerechten Steuerung des paketorientierten Datenaustausches.

15. Netzkontrolleinheit (OLT) nach Anspruch 14,
**dadurch gekennzeichnet,**
daß die Mittel (ZSE) zur Zuteilung von Zugriffsberechtigungen (zb1...n) und die Mittel (ZSE) zur Eintragung und zur Speicherung der zugeteilten Zugriffsberechtigungen (zb1...n) derart ausgestaltet sind,
- daß bei einer den angeforderten Teil-Kommunikationsnetz-Ressourcen-Umfang (tr1...n) modifizierenden Signalisierung von den Netzabschlußeinheiten (NT1...n) oder bei einer eine Modifizierung der Verfügbarkeit der vorgegebenen Ressourcen (vr) anzeigenden Signalisierung vom paketorientierten Kommunikationsnetz (OKN) die Zuteilung der angeforderten TeilKommunikationsnetz-Ressourcen (tr1...n) erneut durchgeführt wird, und
- daß die zugeteilten Zugriffsberechtigungen (zb1...n) in die ringförmig verketteten Speicher (SP1...z) eingetragen und darin abgespeichert werden.

16. Netzkontrolleinheit (OLT) nach Anspruch 14 oder 15, **dadurch gekennzeichnet,**
- daß die Netzkontrolleinheit (OLT) entsprechend den ringförmig verketteten Speichern (SP1...z) ausgestaltete weitere ringförmig verkettete Speicher (SP'1...z) aufweist, wobei die Mittel (ZSE) zur Zuteilung sowie zur Eintragung und Speicherung der Zugriffsberechtigungen (zb1...n) derart ausgestaltet sind,
-- daß Zugriffsberechtigungen (zb1...n) erstmalig in die ringförmig verketteten Speicher (SP1...z) oder weiteren ringförmig verketteten Speicher (SP'1...z) eingetragen werden wobei die Steuerung von Zugriffen von Netzabschlußeinheiten (NT1...n) aktuell durch diese ringförmig verketteten Speicher (SP1...z, SP'1...z) gesteuert wird, und
-- daß bei jeder Änderung von Zugriffsberechtigungen (zb1...n) alle Zugriffsberechtigungen (zb1...n) erneut ermittelt und in die jeweils nicht für die Steuerung von Zugriffen aktuell benutzten ringförmig verketteten Speicher (SP1...z, SP'1...z) eingetragen werden, und
- daß Mittel zum sukzessiven und zyklischen Abtasten derart ausgestaltet sind,
-- daß nach diesem Eintragen der Zugriffsberechtigungen (zb1...n) nach der aktuellen Erteilung eines Zugriffs diese ringförmig verketteten Speicher (SP1...z, SP'1...z) zur Steuerung von Zugriffen benutzt werden.

17. Netzkontrolleinheit nach einen der Ansprüche 14 bis 16
**dadurch gekennzeichnet,**
daß das paketorientierte Kommunikationsnetz (OKN) durch ein nach dem Asynchronen Transfer Modus - ATM - konzipiertes Kommunikationsnetz realisiert ist.

18. Verfahren nach einen der Ansprüche 14 bis 17
**dadurch gekennzeichnet,**
daß die vorgegebenen Ressourcen des paketorientierten Kommunikationsnetzes (OKN) durch die Übertragungskapazität der drahtgebundenen, optischen oder drahtlosen Übertragungsstrecken im Zubringernetz (ACCESS) des paketorientierten Kommunikationsnetzes (OKM) repräsentiert sind.
